# EUROPÄISCHE PATENTSCHRIFT

(11) **EP 2 981 444 B1**
(45) Veröffentlichungstag und Bekanntmachung des Hinweises auf die Patenterteilung: **02.01.2019**
(21) Anmeldenummer: 14715844.8
(22) Anmeldetag: 04.04.2014
(51) Int. Cl.: B60T 15/04, B60T 15/48, B60T 13/68

(54) **PARKBREMSEINRICHTUNG**
PARKING BRAKE DEVICE
SYSTÈME DE FREIN DE STATIONNEMENT

(30) Priorität: 05.04.2013 DE 102013005896
(43) Veröffentlichungstag der Anmeldung: 10.02.2016
(73) Patentinhaber: KNORR-BREMSE Systeme für Nutzfahrzeuge GmbH, 80809 München (DE)
(72) Erfinder: HERGES, Michael, 80935 München (DE)
(86) Internationale Anmeldenummer: PCT/EP2014/000909
(87) Internationale Veröffentlichungsnummer: WO 2014/161671

(56) Entgegenhaltungen:
- WO-A1-02/42136
- WO-A1-03/033321
- WO-A1-2009/015155
- DE-A1- 3 720 347
- DE-A1- 10 053 606
- DE-A1- 19 604 126
- DE-A1-102007 008 504
- DE-A1-102008 015 249
- DE-A1-102011 101 438
- US-A1- 2005 137 773
- US-A1- 2008 105 789
- US-A1- 2009 015 979

## Beschreibung

Die Erfindung bezieht sich auf eine Parkbremseinrichtung gemäß dem Oberbegriff des Patentanspruches 1 und auf ein Verfahren zum elektrischen Ansteuern einer Parkbremseinrichtung.

Eine solche Parkbremseinrichtung ist aus der DE 10 2011 101 438 A1 bekannt. Diese Parkbremseinrichtung hat ein bistabiles Parkbremsventil, das von elektrisch betätigbaren Ventilen wahlweise mit Vorratsdruck oder Atmosphärendruck verbindbar ist. Ein Ausgang des Parkbremsventils steuert ein Relaisventil an. Das Relaisventil steuert eine Federspeicherbremse an. Das Parkbremsventil kann auch optional ein Anhängersteuerventil mit Druckluft versorgen.

Parkbremsen von Nutzfahrzeugen einschließlich Anhängern sind heute regelmäßig mit Federspeicher-Bremszylindern ausgestattet, die in Lösestellung einen Federkompressionsraum mit Druckluft beaufschlagen und damit die Feder gespannt halten, während zum Parkbremsen der Federkompressionsraum entlüftet, d.h. mit Atmosphärendruck verbunden wird, so dass der Bremszylinder unter Wirkung der Feder eine Bremskraft erzeugt (vgl. Bosch, Kraftfahrttechnisches Taschenbuch, 22. Auflage, Düsseldorf, 1995, S. 648).

Generell sind sowohl rein pneumatisch betriebene Parkbremsen bekannt, die mit vom Fahrer zu betätigenden, meist bistabilen Parkbremsventilen betrieben werden, als auch elektro-pneumatische Anlagen mit einem bistabilen, elektromechanischen Ventil. Beide Ventilstellungen für "Parkbremse" und "Lösen" müssen dabei "stabil" sein, d.h. ohne Einwirkung einer Person in der jeweils gewählten Stellung bleiben. Dies gilt auch für einen Ausfall einer elektrischen Stromversorgung für die Ventile.

Eine elektrische bzw. elektro-pneumatische Parkbremse muss daher zwei stabile, auch bei Stromausfall beizubehaltende bzw. automatisch einzunehmende Stellungen besitzen, nämlich
1. bei eingelegter Parkbremse muss dieser Zustand ohne elektrische Energie beibehalten werden;
2. während einer Fahrt müssen, zumindest solange Vorratsdruck vorhanden ist, die Federspeicher und der Parkbremseingang eines Anhängersteuerventils druckbeaufschlagt bleiben bzw. werden.

Ein ungewolltes Umschalten zwischen den beiden Zuständen muss auch im Fehlerfall verhindert werden. Als einzige Ausnahme hiervon ist zugelassen, dass bei Abriss einer pneumatischen Leitung die Federspeicherbremse aktiviert wird. In diesem Fall muss auch automatisch der Anschluss zum Anhängersteuerventil entlüftet werden.

Zur Ansteuerung eines Druckes ist aus der WO 2005/115815 A1 und der US 6,371,573 B1 bekannt, ein Volumen, das einen gewünschten Druck haben soll, zyklisch zu be- und entlüften. Dabei stellt sich in einer gewissen Zeit der über einen Zyklus gemittelte Druck von selbst auf einen Wert ein, der abhängig ist vom Vorratsdruck und dem Verhältnis der Zeitanteile der Belüftung und Entlüftung innerhalb des Zyklus. Der Zusammenhang zwischen Vorratsdruck, Tastverhältnis, d.h. Anteil der Belüftungs- und Entlüftungsphasen, und dem sich einstellenden Mitteldruck wird bei der Entwicklung des jeweiligen Gerätes ermittelt und in einem nicht flüchtigen Speicher eines Steuergerätes abgelegt. Hat sich ein mittlerer Druck eingestellt, so ist die Schwankungshöhe des Drucks innerhalb eines Zyklus abhängig vom Volumen, in das der Druck eingesteuert wird, den Be- und Entlüftungsquerschnitten sowie der gesamten Zykluszeit. Eine solche Drucksteuerung hat allerdings die Nachteile, dass:
- der Druck im Allgemeinen nicht so schnell seinen Sollwert erreicht wie bei einem geschlossenen Druckregelkreis;
- nicht ganz sicher ist, ob der gewünschte Druck auch wirklich anliegt, da er nicht gemessen wird;
- Unterschiede im Bauteileverhalten durch Fertigung, Strömungsverhältnisse in Rohrleitungen oder Schläuchen, Verschleiss oder sonstige Einflüsse nicht kompensiert werden, wie es bei einem geschlossenen Regelkreis der Fall ist;
- während der gesamten Zeit, in der der ausgesteuerte Druck größer als der Atmosphärendruck und kleiner als der Vorratsdruck ist, entstehen prinzipbedingt Strömungsgeräusche;
- während der gesamten Zeit, in der der ausgesteuerte Druck größer als der Atmosphärendruck und kleiner als der Vorratsdruck ist, muß das Magnetventil prinzipbedingt permanent ein- und ausgeschaltet werden, was zu höherem Verschleiß und höherer thermischer Belastung führt, als wenn es auch eine Druck-Halte-Stellung gäbe; - während der gesamten Zeit, in der der ausgesteuerte Druck größer ist als der Atmosphärendruck und kleiner als der Vorratsdruck, wird prinzipbedingt Luft verbraucht.

Wird nach dieser Methode ein Druck in die Steuerkammer eines Relaisventils eingesteuert, so kann durch geschickte Wahl der maßgeblichen Parameter erreicht werden, dass Druckschwankungen kleiner bleiben als die Hysterese des Relaisventils. Dadurch wird nur das vergleichsweise kleine Volumen der Steuerkammer des Relaisventils während des Druckhaltens ständig be- und entlüftet, nicht jedoch das stromabwärts zum Relaisventil gelegene Hauptvolumen, wie z.B. ein Bremszylinder oder ein Federspeichervolumen. Damit hält sich der Gesamtluftverbrauch in vertretbaren Grenzen.

Wegen der genannten Nachteile wird eine solche Drucksteuerung bisher jedoch überwiegend nur für eine Antiblockierfunktion (ABS-Funktion) benutzt. Die zu regelnde Größe ist dabei nicht der Druck, sondern der Radschlupf, der über Drehzahlsensoren am Rad gemessen wird, wodurch dann doch wieder ein geschlossener Regelkreis entsteht. Da Blockierschutzeingriffe selten nötig sind und dabei auch nur sehr kurzzeitig der Druck gehalten wird, stören etwas erhöhter Verschleiß, Luftverbrauch, Geräuschpegel und thermische Belastung nicht.

Diese Art von Drucksteuerung wurde in der eingangs genannten DE 10 2011 101 438 A1 bei einer Parkbremseinrichtung angewandt unter der Erkenntnis, dass die Gesamtheit der Bremsanlagen in einem Nutzfahrzeug bei Verwendung einer elektronisch gesteuerten Parkbremse und einer elektronisch gesteuerten Betriebsbremse so vernetzt ist und gesteuert werden kann, dass der Druck zu Federspeicherbremsen nur in wenigen Ausnahmefällen zwischen dem Atmosphärendruck und dem Vorratsdruck eingesteuert werden muss und auch dann nur kurzzeitig gehalten werden muss. Um die Parkbremse (Federspeicherbremsen) vollständig zu öffnen, offen zu halten, zu schließen oder geschlossen zu halten, ist dies nicht erforderlich. Eine Ausnahme ist lediglich dann gegeben, wenn ein Fehler der Betriebsbremse deren Funktionsfähigkeit einschränkt und die Parkbremse die Aufgabe der Hilfsbremse im Fahrzeug übernehmen muss. Da dies nur in seltenen Ausnahmefällen nötig ist, ist eine reine Drucksteuerung ohne einen durch einen Drucksensor geschlossenen Regelkreis ausreichend. Auch ist dann nur noch ein Magnetventil zur Ansteuerung erforderlich. Dadurch ergeben sich deutlich geringere Kosten sowie geringerer Bauraum und geringeres Gewicht. Durch die geringe Anzahl der Bauteile erhöht sich auch die Zuverlässigkeit.

Wenn der Fahrer bei fehlerfreier Park- und Betriebsbremsanlage mit dem Bedienelement der Parkbremse einen Bremswunsch einspeist, wird dieser nicht, wie beim Stand der Technik, mittels Entlüftung der Federspeicher bis zur gewünschten Bremswirkung umgesetzt, sondern über Belüftung der Betriebsbremszylinder durch die Betriebsbremsanlage. Dies hat den erheblichen Sicherheitsgewinn, dass es sich dann um eine schnelle, präzise und mit ABS abgesicherte Bremsung handelt und somit blockierte Räder und Fahrstabilitätsverlust vermieden werden.

Aus EP 1 406 805 B1, EP 1 464 557 B1 und DE 10 2004 051 309 A1 sind Luftaufbereitungsgeräte bekannt, in die eine elektrische Steuerung einer Parkbremse integriert ist. Bei der EP 1 464 557 B1 wird dabei der Druck zum Federspeicher in einem geschlossenen Regelkreis geregelt, wobei mit einem Drucksensor der Druck am Ausgang zum Federspeicher gemessen wird und mit zwei Magnetventilen die Schaltstellungen "Belüften", "Entlüften" und "Druck halten" möglich sind. Damit ist eine präzise, schnelle und vergleichsweise leise Regelung des Druckes zu den Federspeichern möglich, insbesondere wenn dieser Druck über längere Zeit zwischen Atmosphärendruck und Vorratsdruck gehalten werden muss. Allerdings bedeuten der Drucksensor und die beiden Magnetventile höhere Kosten, größeren Bauraum, größeres Gewicht und mögliche Fehlerquellen.

Aufgabe der Erfindung ist es daher, eine Parkbremseinrichtung der eingangs genannten Art sowie ein Verfahren zu deren Ansteuerung dahingehend zu verbessern, dass mit geringerem baulichem Aufwand eine schnellere Einregelung eines Druckes für die Parkbremseinrichtung erreicht wird.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Grundidee der Erfindung ist es, bei einer Drucksteuerung durch abwechselndes Be- und Entlüften bei Änderungen eines Drucksollwertes zunächst einen Initialpuls für Belüften oder Entlüften vorzusehen. Dieser Initialpuls wird zuerst ausgeführt, bevor mit den Zyklen für Belüften und Entlüften fortgefahren wird. Die Zeitdauer des Initialpulses wird einem gespeicherten Kennfeld entnommen. Dieses Kennfeld ist mehrdimensional und wird während der Entwicklung der Parkbremseinrichtung ermittelt und in einem nicht flüchtigen Speicher eines Steuergerätes der Parkbremseinrichtung gespeichert. Bei einer Änderung des Solldrucks wird der gerade geschätzte anliegende Druck als Startdruck aufgefasst, der Differenzdruck zum Solldruck berechnet und mit diesen Werten aus dem Kennfeld die Zeitdauer für den Initialpuls entnommen. Die Dauer des Initialpulses ist dabei eine Funktion des geschätzten Istdruckes, des Vorratsdruckes und des erwähnten Differenzdruckes. Beim anschließenden Takten ist das Tastverhältnis eine Funktion des Solldrucks und des Vorratsdruckes.

Durch den Initialpuls wird der Solldruck wesentlich schneller erreicht als mit Impulsen konstanter Zykluszeit und konstantem Tastverhältnis.

Das Umschalten von Park- in den Fahrzustand als auch das Umschalten vom Fahr- in den Parkzustand wird elektrisch gesteuert ausgelöst. Wünschenswert ist weiterhin, dass ein beliebiger Druck zwischen Null und Vorratsdruck im Fahrzustand eingesteuert werden kann.

In einem ersten Ausführungsbeispiel der Erfindung ist das zu steuernde Gerät ein Relaisventil, dessen pneumatischer Steuereingang mit einem Anschluss des Parkbremsventils verbunden ist.

Ein erster Anschluss des Parkbremsventils kann mittels einer elektrisch betätigten Ventilanordnung, die aus zwei 2/2-Wege-Ventilen oder einem 3/2-Wege-Ventil besteht, entweder mit Atmosphärendruck, mit Vorratsdruck oder einem Druck dazwischen beaufschlagt werden. Diese elektrisch betätigte Ventilanordnung verbindet im stromlosen Zustand mit Vorratsdruck. Der zweite Anschluss des Parkbremsventils kann mittels eines Umschaltventils, wie z.B. mittels eines 3/2-Wege-Magentventils entweder mit Atmosphärendruck oder mit Vorratsdruck beaufschlagt werden. Dieses Umschaltventil schaltet im stromlosen Zustand nach Atmosphärendruck.

Das Parkbremsventil ist somit bistabil und ändert bei Stromausfall der Stromversorgung für die elektrisch betätigten Ventile seinen jeweils zuvor eingenommenen Zustand nicht.

Mit dem bisher geschilderten Ausführungsbeispiel der Erfindung können folgende sechs Funktionen realisiert werden, die ausführlich in der DE 10 2011 101 438 A1 beschrieben sind und deshalb hier nicht mehr im Detail erläutert werden müssen:
Funktion 1: Stabiler Parkzustand
Funktion 2: Stabiler Fahrzustand
Funktion 3: Elektrisches Umschalten von Park- in den Fahrzustand
Funktion 4: Elektrisches Einsteuern eines beliebigen Drucks
Funktion 5: Elektrisches Umschalten vom Fahr- in den Parkzustand
Funktion 6: Testfunktion

Das Parkbremsventil der bisher beschriebenen Art kann auch mit einem oder mehreren Anhängersteueranschlüssen zur pneumatischen Ansteuerung eines Anhängersteuermoduls oder Anhängersteuerventils ausgestattet sein.

Für die Magnetventileinrichtung 25 sieht die Erfindung zwei Varianten vor. Eine erste Variante hat zwei 2/2-Wege-Magnetventile, von denen eines ein Belüftungs- und das andere ein Entlüftungsventil ist.

Nach einer Alternative kann sie ein 3/2-Wege-Magnetventil sein, mit dem ebenfalls eine Drucksteuerung möglich ist. Dabei wird nach dem Initialpuls in schneller Folge dieses Ventil für eine jeweils erste Zeitspanne mit Atmosphärendruck und danach für eine zweite Zeitspanne mit Vorratsdruck verbunden. Es stellt sich nach kurzer Zeit ein mittlerer Druck ein, dessen Höhe abhängig ist vom Verhältnis zwischen erster und zweiter Zeitspanne. Das Verhältnis der Zeitspannen wird abhängig von einem Solldruck anhand des Kennfeldes gesteuert.

Die Parkbremseinrichtung nach der Erfindung kann auch in ein Luftaufbereitungsgerät für Kraftfahrzeug integriert sein.

Im folgenden wird die Erfindung anhand von Ausführungsbeispielen im Zusammenhang mit der Zeichnung ausführlicher erläutert. Es zeigt:
- Fig. 1: eine Parkbremseinrichtung mit pneumatischem bistabilem Ventil;
- Fig. 2: eine Parkbremseinrichtung mit bistabilem Magnetventil;
- Fig. 3: eine Parkbremseinrichtung mit elektromotorisch ausgetriebenem, bistabilem Ventil;
- Fig. 4: ein Diagramm von zeitlichen Druckverläufen beim Stand der Technik;
- Fig. 5: ein Diagramm von zeitlichen Druckverläufen nach der Erfindung;
- Fig. 6: ein dreidimensionales Kennfeld der Werte Differenzdruck, Istdruck und Pulszeit mit einzelnen Messpunkten;
- Fig. 7: ein Diagramm gemäß Fig. 6 mit Messpunkten und errechneten Messkurven; und
- Fig. 8: ein Messdiagramm eines dreidimensionalen Kennfeldes mit den Größen Tastverhältnis, Vorratsdruck und Enddruck, das nach dem Initialpuls benutzt wird.
- Fig. 9: eine schematische Ansicht der Parkbremseinrichtung, die in den Luftaufbereitungsteil einer Bremsanlage integriert ist.

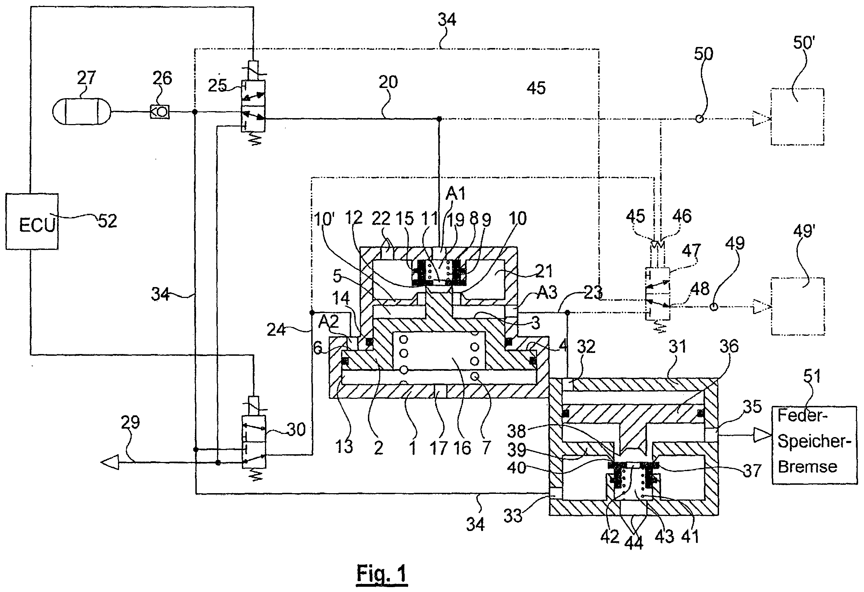

Die Parkbremseinrichtung nach Fig. 1 hat ein pneumatisches Parkbremsventil 1 mit einem Kolben 2, der als Stufenkolben ausgebildet ist, der eine erste Kolbenfläche 3 und eine zweite Kolbenfläche 4 aufweist. Die erste Kolbenfläche 3 grenzt einen ersten Raum 5 ab und die zweite Kolbenfläche 4 einen zweiten Raum 6. Die beiden Kolbenflächen 3 und 4 sind koaxial zueinander und jeweils groß genug, um den Kolben 2 ab einem vorbestimmten Druck gegen die Federkraft einer Feder 7 an einen Anschlag zu verschieben, wobei dieser vorbestimmte Druck kleiner ist als der Vorratsdruck. Der Kolben 2 ist von der Feder 7 belastet, die den Kolben 2 in eine Richtung drückt, bei der die beiden Kolbenflächen 3 und 4 die beiden Räume 5 und 6 verkleinern.

Das Parkbremsventil 1 weist einen zweiten verschieblichen Kolben 8 auf, der durch eine zweite Feder 9 in Richtung zu dem Kolben 2 vorgespannt ist und in Richtung auf einen ersten Ventilsitz 10. Im Boden des zweiten Kolbens 8 ist eine Öffnung 11 vorgesehen, die zum ersten Raum 5 hinweist.

Der Kolben 2 trägt einen zweiten Ventilsitz 12, der mit dem zweiten Kolben 8 zusammenwirkt. Der Kolben 2 und der zweite Kolben 8 sind jeweils über Dichtungen 13, 14, 15 an Gehäusewänden des Parkbremsventils 1 verschieblich geführt. Der Kolben 2 hat einen ersten Federraum 16, in welchem die Feder 7 angeordnet ist. Dieser Federraum 16 ist über eine Gehäuseöffnung 17 zur Atmosphäre hin entlüftet. Der zweite Kolben 8 hat einen zweiten Federraum 19, in dem die Feder 9 angeordnet ist, wobei der zweite Federraum 19 einen ersten Anschluss A1 aufweist, an den eine Steuerdruckleitung 20 angeschlossen ist.

Der erste Ventilsitz 10 trennt bei ausgefahrenem zweiten Kolben 8 den ersten Raum 5 von einer Entlüftungskammer 21, die den zweiten Kolben 8 umgibt und über eine Gehäuseöffnung 22 zur Atmosphäre hin entlüftet ist.

Die Entlüftungskammer 21 und der erste Raum 5 sind durch eine Trennwand 10' voneinander getrennt. Die Trennwand 10' hat rings um das Ventil 10 eine Öffnung, durch die ein Stößel des Kolbens 2 mit dem Ventilsitz 12 in nicht betätigter Stellung hindurchragt.

Der erste Raum 5 weist einen dritten Anschluss A3 auf, der den Ausgang des Parkbremsventils 1 bildet und an den eine Leitung 23 angeschlossen ist. Der zweite Raum 6 weist einen zweiten Anschluss A2 auf, an den eine zweite Steuerdruckleitung 24 angeschlossen ist.

Die erste Steuerdruckleitung 20 ist über eine erste Magnetventileinrichtung 25 und ein Rückschlagventil 26 mit Vorratsdruck, beispielsweise mit einem Vorratsdruckbehälter 27 oder mit Atmosphäre verbunden. Die erste Magnetventileinrichtung 25 kann beispielsweise eine Kombination aus einem ersten 2/2-Wege-Magnetventil sein, das im stromlosen Zustand zum Vorratsdruck durchgeschaltet und im bestromten Zustand abgesperrt ist, und einem zweiten 2/2-Wege-Magnetventil, das im stromlosen Zustand abgesperrt und im bestromten Zustand zum Atmosphärendruck durchgeschaltet ist.

In einer bevorzugten Ausführung besteht die erste Magnetventileinrichtung 25 aus einem 3/2-Wege-Magnetventil, das im stromlosen Zustand zum Vorratsdruck und im bestromten Zustand zum Atmosphärendruck durchgeschaltet ist.

Die zum zweiten Raum 6 führende zweite Steuerdruckleitung 24 ist an ein zweites Magnetventil 30 angeschlossen, das das Parkbremsventil 1 in Fahrstellung bringen und halten kann und beispielsweise ein 3/2-Wege-Ventil ist. Im bestromten Zustand verbindet das zweite Magnetventil 30 die zweite Steuerdruckleitung 24 mit Vorratsdruck von dem Rückschlagventil 26 und beaufschlagt daher den zweiten Anschluss A2 und damit den zweiten Raum 6 des Parkbremsventils 1 mit Vorratsdruck, wodurch der Kolben 2 in seine betätigte Stellung gebracht wird, im unbestromten Zustand mit Atmosphärendruck.

Die erste Magnetventileinrichtung 25 verbindet im stromlosen Zustand den Vorratsdruck mit der Steuerdruckleitung 20 und beaufschlagt daher den ersten Anschluss A1 und damit den zweiten Kolben 8 mit Vorratsdruck. Ist der Kolben 2 in seiner unteren Grenzstellung, so wird über die Öffnung 11 und den geöffneten Ventilsitz 12 der erste Raum 5 ebenfalls mit Vorratsdruck beaufschlagt, wodurch der Kolben 2 in der unteren Grenzstellung verharrt, auch wenn der Raum 6 über das unbestromte Magnetventil 30 entlüftet wird. War der Kolben 2 dagegen in seiner obere Grenzstellung, so ist der Raum 5 mit Atmosphäre verbunden, und der Ventilsitz 12 trennt den Druck an Anschluss A1 vom Raum 5, wodurch der Kolben 2 von der Feder 7 in seiner obere Grenzstellung gehalten wird. Somit ergibt sich die geforderte Bistabilität.

Der erste Raum 5 ist über den dritten Anschluss A3 und die erste Leitung 23 mit einem Relaisventil 31 verbunden und zwar mit dessen pneumatischem Steuereingang 32. Ein Druckmitteleingang 33 des Relaisventils 31 ist über eine Leitung 34 mit Vorratsdruck verbunden und zwar mit dem Ausgang des Rückschlagventils 26. Ein Druckausgang 35 des Relaisventils 31 ist mit einem oder mehreren Federspeicher-Bremszylindern 72 verbunden.

Das Relaisventil 31 weist zwei verschiebliche Kolben 36 und 37 auf, die zusammen einen Ventilsitz 38 bilden. Weiter bildet der zweite Kolben 37 mit einer Gehäusetrennwand 39 einen zweiten Ventilsitz 40. Der zweite Kolben 37 ist durch eine Feder 41 in Richtung zum ersten Kolben 36 hin vorgespannt und besitzt an seinem Kolbenboden eine Öffnung 42, die zu einem Federraum 43 führt, der über eine Öffnung 44 im Gehäuse des Relaisventils 31 und gegebenenfalls einen hier nicht dargestellten Schalldämpfer zur Atmosphäre hin entlüftet ist.

Die Leitungen 20 und 24 können optional zusätzlich an Eingänge eines Anhängertestventils 47 angeschlossen sein, dessen Ausgang 48 mit einem zweiten Anhängersteuerventilausgang ASV2 verbunden ist. Optional kann die Steuerdruckleitung 20 auch zu einem ersten Anhängersteuerventilausgang 50 führen, an den ein Anhängersteuerventil 50' angeschlossen werden kann.

Es können auch beide vorgenannten Optionen in einem einzigen Gerät verwirklicht sein. In diesem Fall kann in einem Fahrzeug das Anhängersteuerventil 49' oder 50' alternativ mit den Anhängersteuerventilenausgängen 49 oder 50 verbunden werden, während der jeweils andere verschlossen wird. Zur Klarstellung sei darauf hingewiesen, dass in einem Fahrzeug nur ein Anhängersteuerventil vorhanden ist. Um Fahrzeuge mit Anhänger bedienen zu können, gibt es optional einen oder zwei Anhängersteuerventilausgänge 49 und/oder 50. Wenn es zwei Anhängersteuerventilausgänge 49 und 50 gibt, kann der Fahrzeughersteller sich aussuchen, an welchen der Anhängersteuerventilausgänge er das Anhängersteuerventil des jeweiligen Fahrzeugs anschließt.

Das Anhängertestventil 47 kann ein pneumatisch gesteuertes Umschaltventil sein, dessen pneumatische Steuereingänge 45 und 46 mit den Steuerleitungen 24 und 20 verbunden sind. Die Druckeingänge sind über die Leitung 23 mit dem dritten Anschluss A3 des Parkbremsventils 1 beziehungsweise über eine Vorratsdruckleitung 34 mit dem Vorratsdruck verbunden.

Im Folgenden wird die Arbeitsweise in Zusammenhang mit Fig. 1 erläutert.

Fig. 1 zeigt den stabilen Parkzustand. Die zwei Ventile 25 und 30 sind unbestromt. Das erste Ventil 25 leitet Vorratsdruck über die Steuerdruckleitung 20 zum Anschluss A1 des Parkbremsventils 1. Das zweite Ventil 30 entlüftet den Anschluss A2 des zweiten Raums 6 zu einer Auslassleitung 29. Der Kolben 2 wird durch die Feder 7 in eine Grenzstellung gedrückt, bei der der Ventilsitz 12 geschlossen und der Ventilsitz 10 geöffnet ist. Damit wird der erste Raum 5 über die Entlüftungskammer 21 und die Gehäuseöffnung 22 entlüftet, und der Anschluss A3 und damit der Steuereingang 22 des Relaisventils 21 sind somit entlüftet, so dass der Kolben 37 des Relaisventils 31 durch die Feder 41 den Ventilsitz 40 schließt. Ein Restdruck der Federspeicher-Bremszylinder verschiebt den Kolben 36 des Relaisventils, so dass der Ventilsitz 38 öffnet und Druck von den Federspeicher-Bremszylindern über die Öffnung 42 im Kolben 38 und den Federraum 43 über die Öffnung 44 fließen kann. Die Federspeicher-Bremszylinder sind entlüftet, und die stabile Parksituation ist gewährleistet.

Beim Zustand des Umschaltens in eine Fahrposition, bei der die Federspeicher-Bremszylinder 72 mit Druck zu beaufschlagen sind, ist die erste Magnetventileinrichtung 25 stromlos, das zweite Magnetventil 30 ist bestromt. Damit gelangt Vorratsdruck von der Leitung 34 über das zweite Ventil 30 zum zweiten Anschluss A2, und der zweite Raum 6 ist mit Vorratsdruck beaufschlagt, wodurch der Kolben 2 gegen die Kraft der Feder 7 in seine untere Grenzstellung gedrückt wird. Dadurch wird der zweite Kolben 8 von der zweiten Feder 9 bis zum Schließen des Ventilsitzes 10 bewegt, und der zweite Ventilsitz 12 öffnet.

Nun gelangt Vorratsdruck über die unbestromte, erste Magnetventileinrichtung 25, die Steuerdruckleitung 20, den Anschluss A1, die Öffnung 11 im zweiten Kolben 8 und den geöffneten Ventilsitz 12 in den ersten Raum 5 und damit zum Anschluss A3. Der Kolben 36 des Relaisventils 31 wird gegen den Kolben 37 gedrückt, wodurch der Ventilsitz 40 öffnet und der Ventilsitz 38 schließt. Damit gelangt Vorratsdruck von der Leitung 34 zum Druckmittelausgang 35 des Relaisventils 31 und löst den Federspeicher-Bremszylinder.

Beim Zustand der stabilen Fahrposition nach dem Umschaltvorgang sind die zwei Ventile 25 und 30 stromlos. Der erste Raum 5 ist mit Vorratsdruck beaufschlagt, wodurch der Kolben 2 in der gegen die Kraft der Feder 7 gegen den Anschlag gedrückten Stellung verbleibt. Der zweite Raum 6 ist entlüftet, jedoch reicht der Druck im ersten Raum 5 aus, den Kolben 2 niedergedrückt zu halten. Am Anschluss A3 liegt somit Vorratsdruck, der den Kolben 36 des Relaisventils 31 gegen den Kolben 37 drückt. Je nach Verhältnis der Flächen am Kolben 36 und der Reibungsverhältnisse bleibt der Ventilsitz 40 geöffnet, und die Federspeicher-Bremszylindern sind dauerhaft mit dem Vorrat verbunden, oder der Ventilsitz 40 schließt, da die Kräfte oberhalb und unterhalb des Kolbens 36, aufgrund des genügend hohen Drucks am Druckmittelausgang 35, ausgeglichen sind. Die Federspeicherbremse ist damit gelöst.

Sind die Ventile 25 und 30 nicht bestromt, so ist der Steuereingang 45 des Anhängertestventils 47 über die Leitung 24 entlüftet. Der Steuereingang 46 des Anhängertestventils 47 ist über die Leitung 20 mit Vorratsdruck beaufschlagt. Dies genügt, um das Anhängertestventil 47 zu betätigen. Dadurch ist der zweite Anhängersteuerventilanschluss 49 mit dem Druck in Leitung 23 verbunden und damit mit dem gleichen Druck, der auch über das Relaisventil 31 den Druck in den Federspeichern 51 steuert. In dieser Schaltstellung herrscht also am zweiten Anhängersteuerventilanschluss 49 in etwa der gleiche Druck wie in den Federspeicher-bremszylindern 51. Aus diesem Grund könnte als alternative, nicht dargestellte Variante eine Leitung vom Anschluss 35 des Relaisventils 31 statt der Leitung 23 mit dem entsprechenden Anschluss des Anhängertestventils 47 verbunden sein. Dieselbe Schaltstellung des Anhängertestventils 47 stellt sich ein, wenn nur das Ventil 30 oder beide Ventile 25 und 30 bestromt sind.

Nur wenn die Magnetventileinrichtung 25 bestromt, das Magnetventil 30 jedoch nicht bestromt ist, sind beide Steueranschlüsse 45, 46 des Anhängertestventils 47 entlüftet, wodurch sich das Anhängertestventil 47 in der in Fig. 1 dargestellten, unbetätigten Schaltstellung befindet und den zweiten Anhängersteuerventilanschluss 49 über die Leitung 34 und das Rückschlagventil 26 mit Vorrat verbindet.

Der erste Anhängersteuerventilanschluss 50 ist über die Leitung 20 unmittelbar mit dem von der ersten Magnetventileinrichtung 25 eingesteuerten Druck beaufschlagt.

Der Fahrzeughersteller kann ein Anhängersteuerventil wahlweise an einem der beiden Anhängersteuerventilanschlüsse anschließen.

Sind die beiden Ventile 25 und 30 unbestromt und ist das bistabile Parkbremsventil in Parkstellung, so ist die Federspeicherbremse zugespannt, während am ersten Anhängersteuerventilanschluss 50 Vorratsdruck herrscht, was dazu führt, dass ein an einem hier angeschlossenen Anhängersteuerventil betriebener Anhänger ungebremst ist, am zweiten Anhängersteuerventilanschluss 49 jedoch Atmosphärendruck herrscht, was dazu führt, dass ein an einem hier angeschlossenen Anhängersteuerventil betriebener Anhänger gebremst ist.

Im zweiten Fall kann durch Bestromen der Magnetventileinrichtung 25 das Anhängertestventil 47 in die unbetätigte Stellung geschaltet, das Anhängersteuerventil 49' über den zweiten Anhängersteuerventilanschluss 49 mit Vorratsdruck beaufschlagt und die Bremsen des Anhängers damit gelöst werden. Dadurch kann jederzeit festgestellt werden, ob eine so ausgerüstete Fahrzeugkombination ausschließlich mit der Federspeicherbremse des Zugfahrzeugs am Wegrollen gehindert werden kann.

Beim Zustand des elektrischen Einsteuerns eines beliebigen Druckes zwischen Null und Vorratsdruck im Fahrzustand wird die Ventileinrichtung 25 getaktet bestromt, während das Magnetventil 30 permanent bestromt ist und so den Kolben 2 sicher in seiner unteren Grenzstellung gehalten wird, auch wenn der Druck im Raum 5 stark abgesenkt wird. Über die Magnetventileinrichtung 25 kann dann ein beliebiger Druck zwischen Atmosphärendruck und Vorratsdruck im ersten Raum 5 und damit am dritten Anschluss A3 eingestellt werden.

Bei Stromausfall wird zwar der zweite Raum 6 entlüftet, der erste Raum 5 jedoch gleichzeitig belüftet. Die Be- und Entlüftequerschnitte der Ventile 25 und 30 sind so ausgelegt, dass die Summe der Kräfte auf den Kolben 2, die sich aus den Drucken in den Räumen 5 und 6 und den Flächen 3 und 4 ergeben, zu jedem Zeitpunkt größer ist als die Federkraft der Feder 7. Somit bleibt der Kolben 2 in seiner unteren Grenzstellung, und der Druck an den Anhängersteuerventilanschlüssen 49 und 50 und den Federspeicher-Bremszylindern 51 steigt auf Vorratsdruck, wodurch ein unbeabsichtigtes Zufallen der Bremse während der Fahrt ausgeschlossen ist.

Zum Umschalten in die Parkposition wird die erste Magnetventileinrichtung 25 bestromt, während das Magnetventil 30 unbestromt bleibt. Der erste Raum 5 und der zweite Raum 6 werden nun entlüftet. Die Feder 7 drückt den Kolben 2 nach oben gegen den Kolben 8, verschließt den Ventilsitz 12 und öffnet den Ventilsitz 10. Der erste Raum 5 wird über die Entlüftungsöffnung 22 entlüftet. Der Anschluss A3 ist nun drucklos, der Druck unter dem Kolben 36 schiebt diesen nach oben, der Ventilsitz 38 öffnet, und die Federspeicher-Bremszylinder 51 werden bei geschlossenem Ventilsitz 40 über die Öffnungen 42 und 44 entlüftet.

Alle elektrisch betätigten Magnetventile 25 und 30 können nun abgeschaltet werden, und ein stabiler Parkzustand ist erreicht.

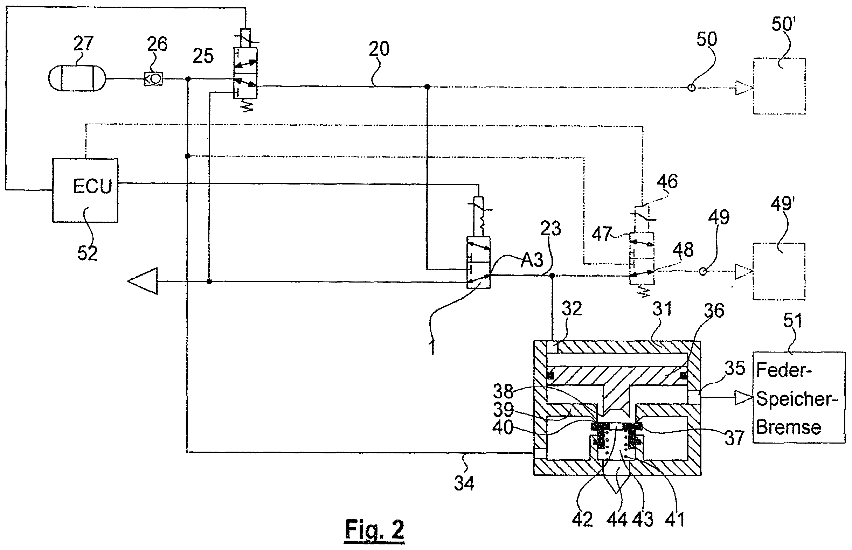

Fig. 2 zeigt eine Variante der Erfindung, bei der das Parkbremsventil 1 ein bistabiles Magnetventil ist. Das Parkbremsventil 1 und das Relaisventil 31 sind jeweils in Parkstellung dargestellt, d.h. die Federspeicherbremse 51 und der Anhängersteueranschluss 49 sind entlüftet und damit gebremst. Der Anhängersteueranschluss 50 ist mit Vorratsdruck beaufschlagt. Die Magnetventileinrichtung 25 wird von der Steuereinheit 52 ebenfalls getaktet angesteuert. Das bistabile Magnetventil 1 kann, je nach Bauart, durch Bestromung unterschiedlicher Spulen oder mit unterschiedlicher Polarität zwischen stabiler Fahr- und Parkstellung umgeschaltet werden.

Als Anhängertestventil 47 wird hier, im Unterschied zu Fig. 1, ein elektrisch angesteuertes 3/2 Magnetventil verwendet, das im unbestromten Zustand den zweiten Anhängersteuerventilanschluss 49 mit der Leitung 23 bzw. in einer hier nicht dargestellten Variante mit dem Druck, der vom Relaisventil zu den Federspeicher-Bremszylindern geliefert wird, verbindet, im bestromten Zustand mit Vorratsdruck. Dies hat den Vorteil, dass die Anhängertestfunktion völlig unabhängig von anderen Funktionen geschaltet werden kann.

Die beiden beschriebenen Varianten des Anhängertestventils 47 können mit allen Varianten des Parkbremsventils 1 kombiniert werden.

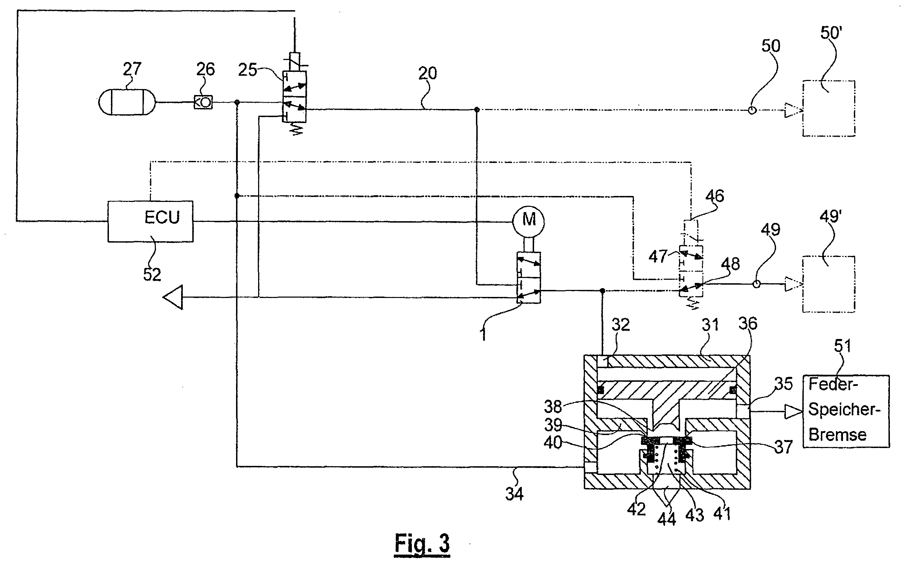

Fig. 3 zeigt eine Variante der Erfindung, bei der das Parkbremsventil 1 ein bistabiles, elektromotorisch angetriebenes Umschaltventil ist. Die Bistabilität kann bei dieser Variante beispielsweise durch eine selbsthemmende, elektromotorisch abgetriebene Gewindespindel dargestellt werden. Ansonsten entsprechen alle Funktionen denen der Fig. 2.

Bei allen Ausführungsbeispielen der Fig. 1, 2 und 3 sind alle elektrisch gesteuerten Magnetventile 25, 30 in Fig. 1 und 1 und 25 in den Fig. 2 und 3 elektrisch von einer elektronischen Steuereinheit 52 angesteuert, die ihrerseits vom Fahrer des Fahrzeuges durch Eingabebefehle oder automatische Funktionen, wie beispielsweise automatisches Einlegen der Parkbremse beim Anhalten oder automatisches Lösen beim Losfahren, aktiviert wird.

Zum Verständnis des Anhängertestventils 47 und der Anhängersteuerventilanschlüsse 49 und 50 sei noch Folgendes erläutert:
Ist das Anhängersteuerventil 49' am Anschluss 49 angeschlossen, so ist bei im Zugfahrzeug eingelegter Parkbremse der Anhänger mit seiner Betriebsbremse dauernd gebremst. Da aber die Betriebsbremse des Anhängers nur solange bremst, wie der Anhänger Luftvorrat hat, wird seine Betriebsbremse nach einigen Tagen keine Luft mehr haben und sich lösen. Dann könnte der ganze Lastzug losrollen. Damit der Fahrer, bevor er aussteigt, dieses Verhalten simulieren kann, um zu sehen, ob der Zug stehen bleibt, schreibt das Gesetz das Anhängertestventil 47 vor. Ist das Anhängersteuerventil 50' am Anschluss 50 verbaut, so ist der Anhänger in der stabilen Parkposition ohnehin ungebremst.

Nur das Ventil 25 wird getaktet und steuert den Druck. Dieses Ventil 25 hat die Funktion, zur Drucksteuerung permanent zwischen Atmosphärendruck und Vorratsdruck umzuschalten. Daher kann es ein einzelnes 3/2 Magnetventil sein, wie in den Figuren gezeichnet, das unbestromt mit Vorratsdruck, bestromt mit Atmosphärendruck verbunden ist, oder eine Magnetventileinrichtung, bestehend aus zwei 2/2 Magnetventilen, d.h. einem Entlüftemagnetventil nach Atmosphäre, das unbestromt geschlossen ist, und einem Belüftemagnetventil nach Vorratsdruck, das unbestromt offen ist. Werden die beiden 2/2 Magnetventile im getakteten Betrieb gemeinsam ein- und ausgeschaltet, ist das Verhalten gleich wie bei einem einzelnen 3/2 Magnetventil. Letztere Alternative hätte noch den Vorteil, dass durch Bestromen nur des Belüftemagnetventils der gerade vorliegende Druck auch mal "eingefroren" werden könnte, ohne permanent mit den Ventilen "klappern" zu müssen. Da es also eine Variante mit zwei Magnetventilen gibt, wurde der allgemeinere Begriff Magnetventileinrichtung für das Ventil 25 verwenden, wenn nicht explizit eine der beiden Varianten gemeint ist.

Das Magnetventil 30 dient ausschließlich dazu, das pneumatisch angesteuerte Parkbremsventil nach Fahrstellung umzuschalten und es dort sicher zu halten, während über das Ventil 25 der Druck variiert wird. Es existiert also nur in den Varianten, in denen das Parkbremsventil ein rein pneumatisch gesteuertes Ventil ist. In den Fällen, in denen das Parkbremsventil elektromotorisch oder elektromagnetisch angetrieben ist, ist das Magnetventil 30 nicht vorhanden. Da das Ventil 30 nichts mit der eingesteuerten Druckhöhe zu tun hat, wird es auch nicht getaktet angesteuert.

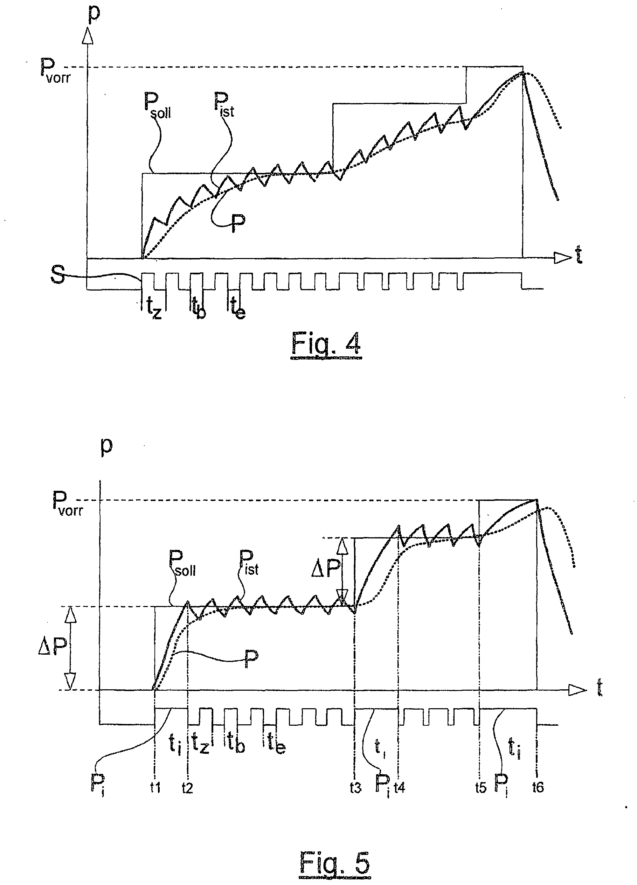

Fig. 4 zeigt die zeitlichen Verläufe eines angeforderten Solldruckes Pₛₒₗₗ, des Drucks Pᵢₛₜ nach der Magnetventileinrichtung 25 und eines sich am Ausgang des Relaisventils einstellenden Druckes P beim Stand der Technik. Weiter zeigt das Diagramm den zeitlichen Verlauf von elektrischen Ansteuersignalen S, wobei bei dem hier dargestellten Stand der Technik die Zykluszeit t_{z} konstant ist und sich aus den variablen Be- und Entlüftungszeiten t_{b} und tₑ zusammensetzt, die sich aus dem weiter unten beschriebenen Kennfeld ergeben. Der maximal mögliche Druck Pᵥₒᵣᵣ ist durch den Vorratsdruck vorgegeben.

Aus Fig. 4 erkennt man, dass der jeweilige Sollwert durch das Takten mit konstanter Zykluszeit relativ spät erreicht wird.

Fig. 5 zeigt dasselbe Diagramm für die Erfindung. Man erkennt, dass bei jeder Sollwertänderung ein Initialpuls für eine Zeitdauer tᵢ an die Magnetventileinrichtung 25 angelegt wird und erst nach Beendigung des Initialpulses auf das normale Takten mit konstanter Zykluszeit umgeschaltet wird. Damit erreicht der Druck P am Ausgang des Relaisventils deutlich schneller den gewünschten Sollwert Pₛₒₗₗ.

Wie eingangs erwähnt, werden die Zeiten tᵢ sowie tₑ und t_{b} oder das Tastverhältnis t_{b}/t_{z} aus gespeicherten Tabellen der elektronischen Steuereinheit 52 entnommen. Zumindest die Tabellen für die Initialpulszeiten ti enthalten Daten mehrdimensionaler Kennfelder. Der Zusammenhang zwischen den einzelnen Parametern, wie Zeitdauer tᵢ des Initialpulses, Druck vor dem Initialpuls pᵢₛₜ, Vorratsdruck Pᵥₒᵣᵣ und Differenzdruck DeltaP = Pₛₒₗₗ - Pᵢₛₜ kann im Allgemeinen nicht algorithmisch als Formel angegeben werden, sondern wird während der Entwicklung durch Prüfstandversuche ermittelt und dann in dem genannten Kennfeld gespeichert. Dem liegt die Erkenntnis zugrunde, dass weder die relevanten Einflussparameter, wie z.B. Induktivität der Spule, Reibung im Anker, Temperatur, Drosselwirkung in der Luftführung, Spulenstrom usw., noch deren genaue Wirkmechanismen rechnerisch beschrieben werden können. Wichtig ist nur, dass sie über die Serienstreuungen, Betriebsbedingungen und Lebensdauer des Gerätes genügend konstant bleiben oder die Änderungen im Betrieb ermittel- und damit kompensierbar sind, was durch Versuchsreihen sichergestellt werden kann.

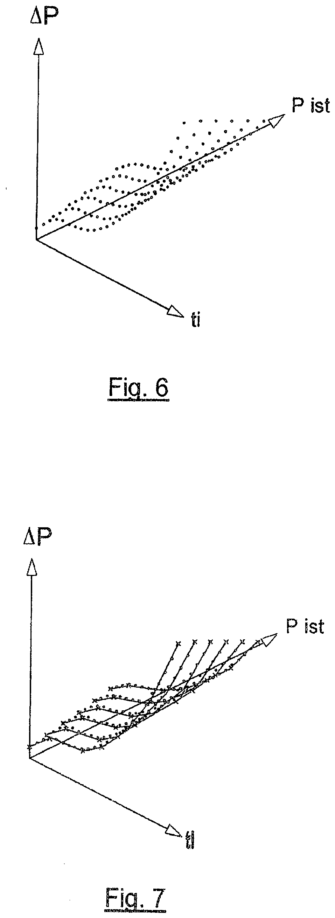

Die Kennfeldermittlung läuft in der Praxis so ab, dass auf einem Prüfstand mittels vieler Einzelimpulse mit vorher definiert eingestellten Werten für Ist-Druck, Vorratsdruck und Impulszeit der sich ergebende Differenzdruck gemessen wird, was in Fig. 6 durch einzelne Messpunkte dargestellt ist. Dabei werden alle in der Praxis relevanten Wertebereiche der genannten Größen mit vorgegebener Auflösung durchfahren. Jede Messung definiert somit einen Punkt in dem mehrdimensionalen Kennfeld. Zur Veranschaulichung ist hier beispielhaft in Fig. 6 ein dreidimensionales Kennfeld mit den Achsen, Pulszeit, anfänglicher Ist-Druck Pᵢₛₜ und Differenzdruck DeltaP dargestellt.

Um die im fertigen Gerät zu speichernde Datenmenge zu minimieren, werden Ausgleichskurven berechnet, die beispielsweise Polygonzüge sind, die in Fig. 7 dargestellt oder Polynome sind. Somit müssen nur die die Ausgleichskurven beschreibenden Daten, beispielsweise die Eckpunkte der Polygonzüge (Kreuze aus Fig. 7), im Speicher hinterlegt werden, während die Zwischenwerte durch geeignete Interpolationsverfahren ermittelt werden.

Zur Steigerung der Genauigkeit können auch noch andere Größen, wie z.B. die momentane Versorgungsspannung und die Umgebungstemperatur, entweder als zusätzliche Dimension des Kennfeldes oder algorithmisch oder als Kombination von beiden berücksichtigt werden. So hat es sich beispielsweise bewährt, den Einfluss der Versorgungsspannung als Offset zur Pulszeit zu addieren. Die Werte für das zur aktuellen Versorgungsspannung passende Offset werden während der Entwicklung in Prüfstandsversuchen ermittelt und beispielsweise als zusätzliche Kennlinie gespeichert.

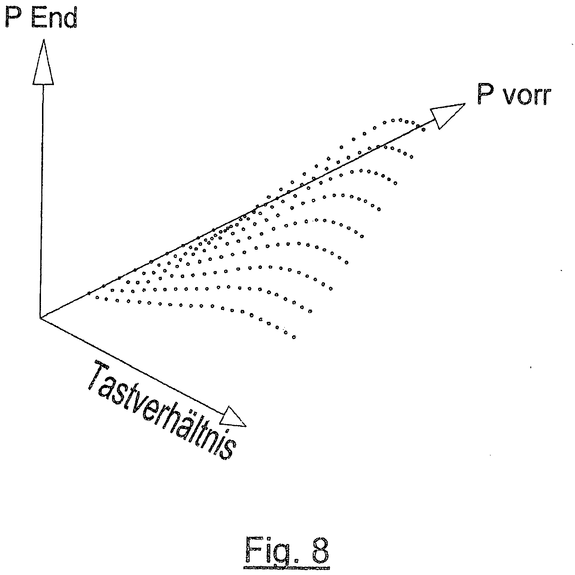

Das nach Ende des Initialpulses anzuwendende Tastverhältnis wird im Zusammenhang mit dem Vorratsdruck und dem zu erreichenden Enddruck ebenfalls mit Prüfstandversuchen ermittelt, indem bei jedem relevanten Vorratsdruck das Tastverhältnis von 0% bis 100% in kleinen Schritten durchfahren wird, bis sich ein konstanter, mittlerer Druck eingestellt hat, der dann den Enddruck P_{end} für dieses Tastverhältnis und diesen Vorratsdruck darstellt. Das entsprechende Kennfeld ist in Fig. 8 dargestellt. Auch hier müssen nicht alle Messpunkte im Speicher abgelegt werden, sondern zur Datenreduktion können Ausgleichskurven ermittelt und nur die diese beschreibenden Daten gespeichert werden.

Wird im Fahrbetrieb die Drucksteuerung aktiv, so führt die ECU ständig eine Schätzung des Druckes P mit, indem sie nach jeder Aktion die erwartete Druckreaktion als Schätzwert annimmt. Soll der Druck geändert werden, so ermittelt die ECU aus dem geschätzten Druck P, der momentan zu den Federspeichern ausgesteuert wird, dem daraus und dem neuen Solldruck Pₛₒₗₗ errechneten Differenzdruck Delta P, dem Vorratsdruck Pᵥₒᵣᵣ und gegebenenfalls noch anderen Parametern wie z. B. der Versorgungsspannung, anhand des gespeicherten Kennfelds einen Wert für die Zeitdauer tᵢ des Initialpulses Pᵢ, der bezogen auf Figur 5 von t1 bis t2 andauert. Anschließend wird mit konstantem, dem Solldruck Pₛₒₗₗ entsprechenden Tastverhältnis t_{b}/t_{z} getaktet. Der neue, zu den Federspeichern ausgesteuerte Druck P stellt sich dann nach kurzer Zeit als Funktion des Mittelwertes des schwankenden Druckes Pᵢₛₜ der Figur 5 und des Übertragungsverhaltens des Relaisventils ein. Da das Übertragungsverhalten des Relaisventils bei der Erstellung der Kennfelder bereits mit eingeflossen war, geht die Elektronik davon aus, dass der neue Druck P nun gleich dem Solldruck Pₛₒₗₗ ist. Zum Zeitpunkt t3 wird ein neuer Sollwert Pₛₒₗₗ vorgegebenen. Aus der ECU 52 wird von dem dann vorhandenen Druck P und dem neuen Sollwert Pₛₒₗₗ ein neues Delta P ermittelt und daraus wiederum zum Zeitpunkt t3 ein neuer Wert tI für den Initialpuls Pᵢ ermittelt, der bis zum Zeitpunkt t4 dauert. Anschließend wird wiederum getaktet, jedoch mit einem anderen Tastverhältnis, das aus dem Kennfeld gemäß Figur 8 entnommen wird.

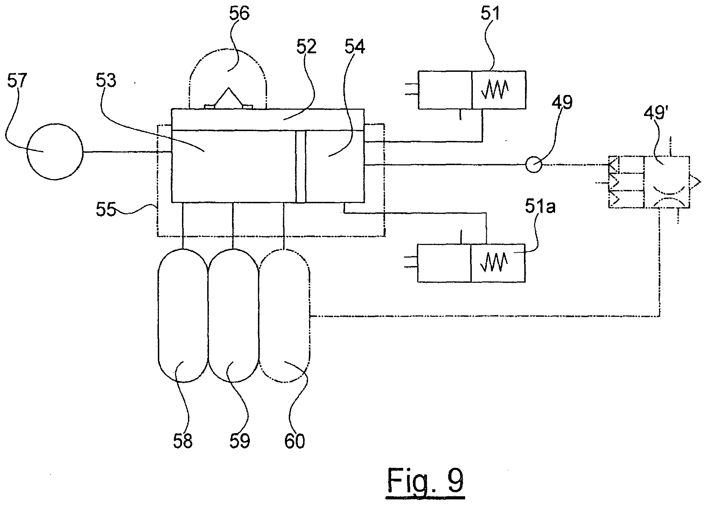

Fig. 9 zeigt eine Prinzipskizze eines pneumatischen Systems eines Kraftfahrzeuges mit einem Luftaufbereitungsteil 53 und einem Parkbremsteil 54, die in ein gemeinsames Gehäuse 55 integriert sind, wobei der Parkbremsteil die oben im Zusammenhang mit den Fig. 1 bis 8 beschriebenen Elemente enthält. An dem gemeinsamen Gehäuse 55 ist eine Lufttrocknerkartusche 56 angebracht. Die Versorgung mit Druckluft erfolgt durch einen Kompressor 57, der mit dem Luftaufbereitungsteil 53 verbunden ist. Der Luftaufbereitungsteil enthält dann auch beispielsweise das Rückschlagventil 26 der Fig. 1.

An den Luftaufbereitungsteil 53 sind mehrere Bremskreise 58, 59 angeschlossen sowie optional ein Bremskreis 60 für das Anhängersteuerventil 49'.

Der Parkbremsteil 54 erhält Druckluft von dem Luftaufbereitungsteil. An ihn sind dann ein oder mehrere Federspeicherbremsen 51 und 51a angeschlossen. Die elektronische Steuereinheit 52 kann ebenfalls an dem gemeinsamen Gehäuse 55 angebracht sein. Sie steuert unter anderem den Parkbremsteil 54 und den Luftaufbereitungsteil, ggf. auch die für das Anhängersteuerventil 49' vorgesehenen Komponenten.

Die Luftversorgung der Parkbremssteuerung kann entweder innerhalb des Luftaufbereitungsteils 53 generiert werden, indem eine Luftversorgungseinrichtung die Luft aus den Behältern der beiden Betriebsbremskreise 58, 59 zum Zeitpunkt, wenn sie benötigt wird, entnimmt, oder indem ein spezieller Vorratsspeicher (27 in Fig. 1-3) dafür vorgesehen ist. Im letzteren Fall ist das dann gewöhnlich derselbe, der auch zur Versorgung des Anhängersteuerventils dient (in Fig. 9: 60). Zusammenfassend schafft die Erfindung eine Parkbremseinrichtung mit reiner Drucksteuerung, die ohne geschlossenen Regelkreis und damit ohne Einsatz von Drucksensoren eine deutlich schnellere Einstellung eines angeforderten Druckes ermöglicht.

## Patentansprüche

1. Parkbremseinrichtung mit einem bistabilen Parkbremsventil (1), einem von dem Parkbremsventil (1) angesteuerten Relaisventil (31) und mindestens einer von einer elektronischen Steuereinheit (52) angesteuerten elektrischen Magnetventileinrichtung (25), die das Parkbremsventil (1) wahlweise mit Vorratsdruck (Pᵥₒᵣᵣ) oder Atmosphärendruck verbindet, wobei ein Ausgang des Parkbremsventils (1) das Relaisventil (31) ansteuert und das Relaisventil (31) eine Federspeicherbremse (51) ansteuert und wobei in der elektronischen Steuereinheit (52) ein erstes Kennfeld gespeichert ist, das ein Tastverhältnis für Ansteuersignale des elektrischen Magnetventils (25) enthält,
**dadurch gekennzeichnet,**
**dass** in der elektronischen Steuereinheit (52) ein zweites, mehrdimensionales Kennfeld gespeichert ist, das bei Änderung eines angeforderten Drucksollwertes (Pₛₒₗₗ) für die Federspeicherbremse (51) die elektrische Magnetventileinrichtung (25) mit einem Initialpuls (Pᵢ) von vorgegebener Zeitdauer (ti) ansteuert, wobei die Zeitdauer (tᵢ) des Initialpulses (Pᵢ) dem gespeicherten Kennfeld entnommen ist, und
**dass** das Kennfeld gespeicherte Daten der Zeitdauer (tᵢ) des Initialpulses (Pᵢ) in Abhängigkeit zumindest vom geschätzten Ist-Druck (P) und dem angeforderten Sollwert (Pₛₒₗₗ) oder vom geschätzten Ist-Druck (P) und der Differenz aus geschätzten Ist-Druck (P)und dem angeforderten Sollwert (Pₛₒₗₗ) enthält.

2. Parkbremseinrichtung nach Anspruch 1, **dadurch gekennzeichnet,**
**dass** die im zweiten Kennfeld gespeicherten Daten der Zeitdauer (tᵢ) des Initialpulses (Pᵢ) auch vom Vorratsdruck (Pᵥₒᵣᵣ) abhängig sind.

3. Parkbremseinrichtung nach Anspruch 1, **dadurch gekennzeichnet,**
**dass** das Parkbremsventil (1) ein bistabiles, pneumatisch angesteuertes Ventil ist.

4. Parkbremseinrichtung nach Anspruch 1, **dadurch gekennzeichnet, dass**
das Parkbremsventil (1) ein elektrisch angesteuertes, bistabiles Magnetventil ist.

5. Parkbremseinrichtung Anspruch 1, **dadurch gekennzeichnet, dass**
das Parkbremsventil (1) ein elektromotorisch angetriebenes, bistabiles Ventil ist.

6. Parkbremseinrichtung nach einem der Ansprüche 1-5, **dadurch gekennzeichnet, dass**
der Ausgang (A3) des Parkbremsventils (1) zusätzlich über ein von dem Magnetventil (25,30) angesteuertes, pneumatisches Ventil (47) mit einem Anhängersteuerventilausgang (49) verbunden ist.

7. Parkbremseinrichtung nach einem der Ansprüche 1-5, **dadurch gekennzeichnet,**
**dass** der Ausgang (A3) des Parkbremsventils (1) zusätzlich über ein Magnetventil (47) mit einem Anhängersteuerventilausgang (49) verbunden ist.

8. Parkbremseinrichtung nach einem der Ansprüche 1-7, **dadurch gekennzeichnet, dass**
das in der elektronischen Steuereinheit (52) gespeicherte Kennfeld singuläre Daten enthält und dass die elektronische Steuereinheit (52) eine Recheneinrichtungen enthält, die eine lineare Interpolation zwischen den singulären Daten durchführt.

9. Parkbremseinrichtung nach einem der Ansprüche 1 bis 8, **dadurch gekennzeichnet,**
**dass** die Parkbremseinrichtung in eine Luftaufbereitungsvorrichtung eines Kraftfahrzeuges integriert ist.

10. Verfahren zum elektrischen Ansteuern einer Parkbremseinrichtung durch eine elektronische Steuereinheit mit folgenden Schritten:
a) Bereitstellen einer Parkbremseinrichtung nach einem der Patentansprüche 1-8;
b) Elektrisches Ansteuern von mindestens einem Magnetventil mit Initialpulsen von abgestufter Zeitdauer (tᵢ);
c) Jeweils Messen des Druck (P), der zu den Federspeichern ausgesteuert wird, und Ermitteln der Differenz (Delta P) vor und nach dem Initialpuls in Abhängigkeit von der Zeitdauer (tᵢ) des Initialpulses (Pᵢ) und des Startdrucks (P) vor dem Initialpuls;
d) Abspeichern von singulären Daten der Initialpulszeiten (tᵢ) in einem mehrdimensionalen Kennfeld der elektronischen Steuereinheit (52) mit zumindest den Parametern Differenzdrücke (Delta P) und anfängliche Istdrücke;
e) Beim späteren Betrieb: Abrufen der gespeicherten Zeitdauer (tᵢ) eines Initialpulses (Pᵢ) in Abhängigkeit von einem angeforderten Soll-Druck (Pₛₒₗₗ) und einem geschätzten, anfänglichen Ist-Druck (Pᵢₛₜ) und Ansteuern des mindestens einen Magnetventils (25) mit einem Initialpuls (Pᵢ) mit der abgerufene Zeitdauer (tᵢ) .

11. Verfahren nach Anspruch 10, **dadurch gekennzeichnet, dass**
ein weiterer Parameter des Kennfeldes die elektrische Versorgungsspannung für das Ansteuern des mindestens einen Magnetventils und/oder die Umgebungstemperatur ist.

12. Verfahren nach Anspruch 10 oder 11, **dadurch gekennzeichnet, dass**
Zwischenwerte aus den singulären Daten durch lineare Interpolation ermittelt werden.

## Claims

1. A parking brake device having a bistable parking brake valve (1), having a relay valve (31) which is activated by the parking brake valve (1), and having at least one electric solenoid valve device (25) which is activated by an electronic control unit (52) and which connects the parking brake valve (1) selectively to feed pressure (P_{feed}) or atmospheric pressure, wherein an outlet of the parking brake valve (1) activates the relay valve (31) and the relay valve (31) activates a spring-loaded brake (51), and wherein, in the electronic control unit (52), there is stored a first characteristic map which contains a duty factor for activation signals of the electric solenoid valve (25),
**characterized**
**in that**, in the electronic control unit (52), there is stored a second, multi-dimensional characteristic map which, in the event of a change of a demanded pressure target value (P_{target}) for the spring-loaded brake (51), activates the electric solenoid valve device (25) with an initial pulse (Pᵢ) of predefined time duration (ti), wherein the time duration (tᵢ) of the initial pulse (Pᵢ) is taken from the stored characteristic map, and
**in that** the characteristic map contains stored data of the time duration (tᵢ) of the initial pulse (Pᵢ) as a function of at least the estimated actual pressure (P) and the demanded target value (P_{target}) or of the estimated actual pressure (P) and the difference between the estimated actual pressure (P) and the demanded target value (P_{target}).

2. The parking brake device as claimed in claim 1,
**characterized**
**in that** the data of the time duration (tᵢ) of the initial pulse (Pᵢ) stored in the second characteristic map are also dependent on the feed pressure (P_{feed}).

3. The parking brake device as claimed in claim 1,
**characterized**
**in that** the parking brake valve (1) is a bistable, pneumatically activated valve.

4. The parking brake device as claimed in claim 1,
**characterized in that**
the parking brake valve (1) is an electrically activated, bistable solenoid valve.

5. The parking brake device as claimed in claim 1,
**characterized in that**
the parking brake valve (1) is a bistable valve driven by electric motor.

6. The parking brake device as claimed in one of claims 1-5, **characterized in that**
the outlet (A3) of the parking brake valve (1) is additionally connected, via a pneumatic valve (47) which is activated by the solenoid valve (25, 30), to a trailer control valve outlet (49).

7. The parking brake device as claimed in one of claims 1-5, **characterized**
**in that** the outlet (A3) of the parking brake valve (1) is additionally connected, via a solenoid valve (47), to a trailer control valve outlet (49) .

8. The parking brake device as claimed in one of claims 1-7, **characterized in that**
the characteristic map stored in the electronic control unit (52) contains singular data, and **in that** the electronic control unit (52) comprises a processing device which performs a linear interpolation between the singular data.

9. The parking brake device as claimed in one of claims 1 to 8, **characterized**
**in that** the parking brake device is integrated into an air treatment apparatus of a motor Vehicle.

10. A method for the electrical activation of a parking brake device by way of an electronic control unit, having the following steps:
a) providing a parking brake device as claimed in one of patent claims 1-8;
b) electrically activating at least one solenoid valve by way of initial pulses of stepped time duration (tᵢ);
c) in each case, measuring the pressure (P) which is output to the spring-type actuators, and determining the difference (Delta P) before and after the initial pulse as a function of the time duration (tᵢ) of the initial pulse (Pᵢ) and of the starting pressure (P) before the initial pulse;
d) storing singular data of the initial pulse times (tᵢ) in a multi-dimensional characteristic map of the electronic control unit (52), with at least the parameters of differential pressure (Delta P) and initial actual pressure;
e) during later operation: retrieving the stored time duration (tᵢ) of an initial pulse (Pᵢ) as a function of a demanded target pressure (P_{target}) and an estimated initial actual pressure (P_{actual}), and activating the at least one solenoid valve (25) with an initial pulse (Pᵢ) with the retrieved time duration (tᵢ).

11. The method as claimed in claim 10, **characterized in that**
a further parameter of the characteristic map is the electrical supply voltage for the activation of the at least one solenoid valve, and/or the ambient temperature.

12. The method as claimed in claim 10 or 11,
**characterized in that**
intermediate values are determined from the singular data by linear interpolation.

## Revendications

1. Dispositif de frein de stationnement, comprenant une vanne (1) de frein de stationnement bistable, une vanne (31) relais, commandée par la vanne (1) de frein de stationnement et au moins un dispositif électrique d'électrovanne, commandé par une unité (52) électronique de commande, qui relie la vanne (1) de frein de stationnement, au choix, à une pression (Pᵥₒᵣᵣ) de réserve ou à la pression atmosphérique, une sortie de la vanne (1) de frein de stationnement commandant la vanne (31) relais et la vanne (31) relais commandant un frein (51) à ressort accumulateur et dans lequel, dans l'unité (52) électronique de commande, est mis en mémoire un premier diagramme caractéristique, qui comporte un rapport cyclique des signaux de commande de l'électrovanne (25) électrique,
**caractérisé**
**en ce que**, dans l'unité (52) électronique de commande, est mis en mémoire un deuxième diagramme caractéristique pluridimensionnel, qui, s'il se produit une modification d'une valeur (Pₛₒₗₗ) de consigne de pression demandée du frein (51) à ressort accumulateur, commande le dispositif (25) électrique d'électrovanne par une impulsion (Pᵢ) initiale d'une durée (tᵢ) donnée à l'avance, la durée (tᵢ) de l'impulsion (Pᵢ) initiale étant tirée du diagramme caractéristique mis en mémoire et
**en ce que** le diagramme caractéristique comporte des données mises en mémoire de la durée (tᵢ) de l'impulsion (Pᵢ) initiale, en fonction d'au moins une pression (P) réelle estimée et de la valeur (Pₛₒₗₗ) de consigne demandée ou de la pression (P) réelle estimée et de la différence entre la pression (P) réelle estimée et la valeur (Pₛₒₗₗ) de consigne demandée.

2. Dispositif de frein de stationnement suivant la revendication 1, **caractérisé**
**en ce que** les données mises en mémoire dans le deuxième diagramme caractéristique de la durée (tᵢ) de l'impulsion (Pᵢ) initiale dépendent aussi de la pression (Pᵥₒᵣᵣ) de réserve.

3. Dispositif de frein de stationnement suivant la revendication 1, **caractérisé**
**en ce que** la vanne (1) de frein de stationnement est une vanne bistable à commande pneumatique.

4. Dispositif de frein de stationnement suivant la revendication 1, **caractérisé**
**en ce que** la vanne (1) de frein de stationnement est une vanne bistable à commande électrique.

5. Dispositif de frein de stationnement suivant la revendication 1, **caractérisé**
**en ce que** la vanne (1) de frein de stationnement est une vanne bistable entraînée par un moteur électrique.

6. Dispositif de frein de stationnement suivant l'une des revendications 1 à 5, **caractérisé**
**en ce que** la sortie (A3) de la vanne (1) de frein de stationnement est reliée supplémentairement par une vanne (47) pneumatique, commandée par l'électrovanne (25, 30) à une sortie (49) de vanne de commande de remorque.

7. Dispositif de frein de stationnement suivant l'une des revendications 1 à 5, **caractérisé**
**en ce que** la sortie (A3) de la vanne (1) de frein de stationnement est reliée supplémentairement par une électrovanne (47) à une sortie (49) de vanne de commande de remorque.

8. Dispositif de frein de stationnement suivant l'une des revendications 1 à 7, **caractérisé**
**en ce que** le diagramme caractéristique mis en mémoire dans l'unité (52) électronique de commande comporte des données singulières et en ce que l'unité (52) électronique de commande comporte des dispositifs de calcul, qui effectuent une interpolation linéaire entre les données singulières.

9. Dispositif de frein de stationnement suivant l'une des revendications 1 à 8, **caractérisé**
**en ce que** le dispositif de frein de stationnement est intégré dans un système de traitement de l'air d'un véhicule automobile.

10. Procédé de commande électrique d'un dispositif de frein de stationnement par une unité électronique de commande, comprenant les stades suivants :
a) on se procure un dispositif de frein de stationnement suivant l'une des revendications 1 à 8;
b) on commande électriquement au moins une électrovanne par des impulsions initiales de durée (tᵢ) échelonnées;
c) on mesure respectivement la pression (P), qui est envoyée au ressort accumulateur, et on détermine la différence (Delta P) avant et après l'impulsion initiale, en fonction de la durée (tᵢ) de l'impulsion (Pᵢ) initiale et de la pression (P) avant l'impulsion initiale;
d) on met en mémoire des données singulières des durées (tᵢ) d'impulsion initiale dans un diagramme caractéristique pluridimensionnel de l'unité (52) électronique de commande avec au moins les paramètres pression différentielle (Delta P) et pression réelle initiale;
e) lors du fonctionnement ultérieur : on appelle la durée (tᵢ) mise en mémoire d'une impulsion (Pᵢ) initiale en fonction d'une pression (Pₛₒₗₗ) de consigne demandée et d'une pression (Pᵢₛₜ) réelle initiale estimée et on commande au moins l'électrovanne (25) par une impulsion (Pᵢ) initiale ayant la durée (tᵢ) appelée.

11. Procédé suivant la revendication 10, **caractérisé en ce qu'**un autre paramètre du diagramme caractéristique est la tension d'alimentation électrique pour la commande de la au moins une électrovanne et/ou la température ambiante.

12. Procédé suivant la revendication 10 ou 11, **caractérisé en ce que** l'on détermine, par interpolation linéaire, des valeurs intermédiaires à partir des données singulières.
